# EUROPÄISCHE PATENTSCHRIFT

(11) **EP 3 153 078 B1**
(45) Veröffentlichungstag und Bekanntmachung des Hinweises auf die Patenterteilung: **29.01.2020**
(21) Anmeldenummer: 16188637.9
(22) Anmeldetag: 13.09.2016
(51) Int. Cl.: A47J 31/46

(54) **GETRÄNKEAUTOMAT**
DRINKS MACHINE
AUTOMATE À BOISSONS

(30) Priorität: 05.10.2015 DE 102015219192
(43) Veröffentlichungstag der Anmeldung: 12.04.2017
(73) Patentinhaber: BSH Hausgeräte GmbH, 81739 München (DE)
(72) Erfinder: Wölfler, Andreas, 5760 Saalfelden (AT); Lemez, Samo, 3327 Smartno ob Paki (SI); Drobez, Iztok, 3313 Polzela (SI)

(56) Entgegenhaltungen:
- WO-A1-2012/117399
- US-A- 5 918 768
- US-A1- 2012 234 180

## Beschreibung

Die vorliegende Erfindung betrifft einen Getränkeautomaten mit einem Wassertank und einem über ein Ventil steuerbaren Wasserzulauf, über welchen der Wassertank aus einem Leitungsnetz mit Wasser befüllbar ist, gemäß dem Oberbegriff des Anspruchs 1.

Gattungsgemäße Getränkeautomaten, insbesondere sogenannte Kaffeevollautomaten, sind insbesondere bei gewerblichen Abnehmern vielfach verbreitet. Um dabei erkennen zu können, ob in dem Getränkeautomaten, beispielsweise in einem Kaffeevollautomaten, ein Wassertank eingesetzt ist, sind sogenannten Detektionseinrichtungen bekannt, welche durch einen kapazitiven oder mechanischen Schalter erkennen können, ob ein solcher Wassertank eingesetzt ist oder fehlt.

Nachteilig bei derartigen kapazitiven Schaltern ist jedoch, dass beispielsweise aufgrund eines Softwarefehlers nicht gewährleistet werden kann, dass das Fehlen des Wassertanks zuverlässig erkannt und ein Befehl zum Schließen des Ventils am Wasserzulauf gegeben wird. Wird dies jedoch nicht zuverlässig erkannt, kann es zu Wasserschäden kommen.

Getränkeautomaten mit einem Überlaufschutz sind beispielsweise aus der Druckschrift US 5 918 768 A bekannt.

Die vorliegende Erfindung beschäftigt sich daher mit dem Problem, für einen Getränkeautomaten der gattungsgemäßen Art eine verbesserte oder zumindest eine alternative Ausführungsform anzugeben, mittels welcher besonders zuverlässig das Fehlen eines Wassertanks detektiert und ein Ventil an einem Wasserzulauf geschlossen werden kann.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, keinerlei elektronische Schalter zur Detektion eines Wassertanks einzusetzen, sondern eine rein mechanisch arbeitende Sicherheitseinrichtung, die unabhängig von einer Software und/oder anderen elektronischen Komponenten ein Ventil an einem Wasserzulauf zuverlässig schließt, sofern ein Wassertank nicht vorhanden ist. Der erfindungsgemäße Getränkeautomat weist dabei besagten Wassertank sowie den über das Ventil steuerbaren Wasserzulauf auf, über welchen der Wassertank aus einem Leitungsnetz mit Wasser befüllbar ist. Ebenso vorgesehen ist eine mit dem Wassertank verbundene Überlaufwanne, in welcher ein Schwimmer angeordnet ist, der bei einem vordefinierten Wasserstand in der Überlaufwanne einen mechanischen Schalter betätigt und dadurch das Ventil schließt, wobei zusätzlich eine Sicherheitseinrichtung vorgesehen ist, die derart ausgebildet ist, dass sie bei entnommenem Wassertank die Überlaufwanne durch ein mechanisches Verstellen eines Leitungsabschnitts und/oder des Wasserzulauf mit dem Wasserzulauf verbindet. Ein derartiger erfindungsgemäßer Getränkeautomat ist in besonderer Weise gegen das Auftreten von Wasserschäden gesichert, da beide Fälle, nämlich einmal mit eingesetztem Wassertank und einmal bei entnommenem Wassertank abgedeckt sind. Ist der Wassertank eingesetzt, so wird dieser über den Zulauf solange mit Wasser befüllt, bis er überläuft und dadurch Wasser in die Überlaufwanne abgibt. In der Überlaufwanne wiederum ist der Schwimmer angeordnet, der bei einem vordefinierten Wasserstand in der Überlaufwanne den mechanischen Schalter betätigt und daraufhin das Ventil am Wasserzulauf schließt. In gleicher Weise funktioniert der erfindungsgemäßen Getränkeautomat auch bei entnommenem Wassertank, wobei hier die Überlaufwanne mittels der Sicherheitseinrichtung direkt oder indirekt mit dem Zulauf verbunden wird, so dass auch hier das Ventil am Wasserzulauf durch Betätigen des mechanischen Schalters geschlossen wird, sofern in der Überlaufwanne ein vordefinierter Wasserstand bzw. Wasserpegel erreicht ist. Der vorliegende erfindungsgemäße Getränkeautomat ist somit gegen das Auftreten von Wasserschäden ausschließlich mechanisch gesichert, so dass auch bei einer schadhaften und fehlerhaften Software ein zuverlässiges Abschalten des Wasserzuflusses gewährleistet werden kann. Ist dabei das Ventil am Wasserzulauf als elektrisches Ventil ausgebildet, so kann dieses über den mechanischen Schalter beispielsweise stromlos geschaltet werden, woraufhin es schließt und dadurch im Sinne eines sogenannten Aquastopps funktioniert.

Bei einer erfindungsgemäßen Lösung weist die Sicherheitseinrichtung einen federbeaufschlagten, schwenkbaren Leitungsabschnitt auf, der bei entnommenen Wassertank federbedingt unter den Wasserzulauf schwenkt. Wird somit der Wassertank entnommen, fährt der federbeaufschlagte, schwenkbare Leitungsabschnitt aus seiner Nichtgebrauchsstellung in eine Gebrauchsstellung, in welcher er mit dem Wasserzulauf verbunden ist und dadurch bei einem noch geöffneten Ventil Wasser direkt in die Überlaufwanne leitet, in welcher nun der aufsteigende Schwimmer bei Erreichen eines vordefinierten Wasserstands den mechanischen Schalter betätigt und das Ventil schließt. Um dabei kein Wasser in das Gehäuse des Getränkeautomaten gelangen zu lassen, kann der Leitungsabschnitt an seinem dem Wasserzulauf zugewandten Ende einen Trichter aufweisen.

Bei einer vorteilhaften Weiterbildung der erfindungsgemäßen Lösung ist der Leitungsabschnitt bei eingesetztem Wassertank entgegen der Federkraft in eine Nichtgebrauchsstellung (Parkposition) verschwenkt. Beim Einschieben des Wassertanks wird somit der Leitungsabschnitt entgegen der Federkraft verschoben, während er beim Entnehmen des Wassertanks federkraftbedingt in seine Gebrauchsstellung ausfährt. Eine derartige Feder stellt dabei ebenfalls ein mechanisches Sicherungselement dar, welches unabhängig von einer Software oder anderen elektronischen Komponenten ein Verschwenken des Leitungsabschnitts in seine mit dem Wasserzulauf kommunizierende Stellung bewirkt.

Bei einer alternativen erfindungsgemäßen Lösung umfasst die Sicherheitseinrichtung den Wasserzulauf, der federbeaufschlagt verschwenkbar ist. Im Vergleich zu der im vorherigen Absatz beschriebenen Sicherheitseinrichtung ist somit nun nicht mehr ein vom Wasserzulauf getrennter Leitungsabschnitt verschwenkbar, sondern der Wasserzulauf selbst, so dass dieser bei eingesetztem Wassertank kommunizierend mit diesem verbunden ist und bei entnommenen Wassertank federbedingt über die Überlaufwanne verschwenkt wird. Das Funktionsprinzip ist dabei identisch zu demjenigen, welches in vorherigen Absätzen beschrieben wurde, mit der einzigen Ausnahme, dass diesmal nicht der Leitungsabschnitt, sondern der Wasserzulauf selbst verschwenkt wird.

Bei einer weiteren vorteilhaften Ausführungsform der erfindungsgemäßen Lösung ist das Ventil als elektrisch betätigbares Ventil ausgebildet, das in stromlosem Zustand geschlossen ist. Der mechanische Schalter schaltet dabei in einer durch den Schwimmer aktivierten Stellung das Ventil stromlos und schließt es dadurch. Zum Öffnen des Ventils muss somit Strom fließen, so dass auch bei einem Stromausfall zuverlässig gewährleistet werden kann, dass der Wasserzufluss unterbrochen wird. Derartige Ventile werden üblicherweise als sogenannte Aquastopp-Ventile bezeichnet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Draufsicht auf einen erfindungsgemäßen Getränkeautomaten,
- Fig. 2: eine Schnittdarstellung des erfindungsgemäßen Getränkeautomaten.

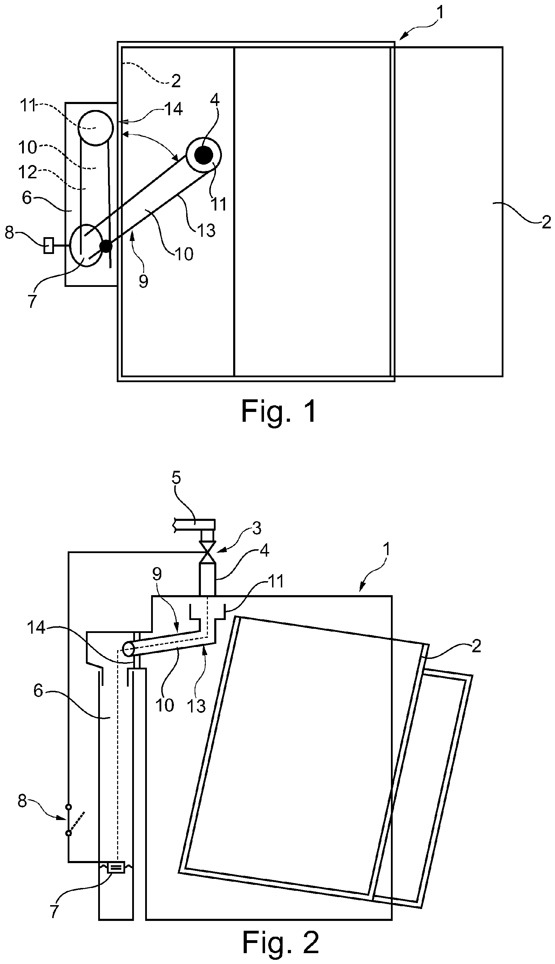

Entsprechend den Fig. 1 und 2, weist ein erfindungsgemäßer Getränkeautomat 1 einen Wassertank 2 sowie einen über ein Ventil 3 steuerbaren Wasserzulauf 4 auf. Über den Wasserzulauf 4 und das Ventil 3 ist der Getränkeautomat 1 mit einem Leitungsnetz 5 verbunden. Ebenfalls vorgesehen ist eine mit dem Wassertank 2 verbundene Überlaufwanne 6, in welcher ein Schwimmer 7 angeordnet ist (vgl. Fig. 2), die bei einem vordefinierten Wasserstand in der Überlaufwanne 6 einen mechanischen Schalter 8 betätigt und das Ventil 3 schließt, wobei zusätzlich eine Sicherheitseinrichtung 9 vorgesehen ist, die derart ausgebildet ist, dass sie bei entnommenem Wassertank 2 die Überlaufwanne 6 direkt fluidisch mit dem Wasserzulauf 4 verbindet.

Betrachtet man die Fig. 1 und 2, so kann man erkennen, dass die Sicherheitseinrichtung 9 einen federbeaufschlagten, schwenkbaren Leitungsabschnitt 10 aufweist, der bei entnommenem Wassertank 2 federbedingt unter den Wasserzulauf 4 schwenkt. Dieser Leitungsabschnitt 10 besitzt an seinem dem Wasserzulauf 4 zugewandten Ende einen Trichter 11, um ein unerwünschtes Austreten von Wasser in ein Gehäuse des Getränkeautomaten 1 zuverlässig verhindern zu können. Bei eingesetztem Wassertank 2 ist der Leitungsabschnitt 10 entgegen der Federkraft in eine Nichtgebrauchsstellung 12 verschwenkt, wogegen er bei entnommenem Wassertank 2 federkraftbedingt in eine Gebrauchsstellung 13 (vgl. Fig. 1 und 2) herausgeschwenkt ist.

Alternativ zu dem zum Wasserzulauf 4 separaten, verschwenkbaren Leitungsabschnitt 10, kann auch vorgesehen sein, dass die Sicherheitseinrichtung 9 den Wasserzulauf 4 umfasst, wobei in diesem Fall der Wasserzulauf 4 federbeaufschlagt verschwenkbar ist. In diesem Fall ist somit der Wasserzulauf 4 bei eingesetztem Wassertank 2 kommunizierend mit diesem verbunden, während er bei entnommenem Wassertank 2 federkraftbedingt über die Überlaufwanne 6 verschwenkt ist. Dies stellt somit lediglich eine mechanische Umkehr zu dem gemäß den Fig. 1 und 2 gezeigten verschwenkbaren Leitungsabschnitt 10 dar.

Das Ventil 3 kann darüber hinaus als elektrisch betätigbares Ventil ausgebildet sein, welches in stromlosem Zustand geschlossen ist. Erreicht somit der Wasserstand in der Überlaufwanne 6 den vordefinierten Pegelstand, so aktiviert der Schwimmer 7 den mechanischen Schalter 8, woraufhin dieser das Ventil 3 stromlos schaltet und dadurch schließt. Ein derartiges, in stromlosem Zustand geschlossenes Ventil 3, wird üblicherweise als sogenanntes Aquastoppventil bezeichnet und sichert den Getränkeautomaten 1 auch generell bei einem Stromausfall vor Wasserschäden.

Mit dem erfindungsgemäßen Getränkeautomaten 1 kann somit ein wirkungsvoller Schutz vor Wasserschäden zuverlässig gewährleistet werden, da der Wasserzulauf 4 sowohl bei eingesetztem, als auch bei entnommenem Wassertank 2 unterbrochen wird, sofern die hierfür vorliegende Bedingungen erfüllt sind. Der Zustand bei eingesetztem Wassertank 2 ist gemäß der Fig. 1 mit unterbrochen gezeichneter Linie dargestellt, während der Zustand bei entnommenem bzw. teilweise entnommenem Wassertank 2 mit durchgezogener Linie dargestellt ist. Ist der Wassertank 2 eingesetzt, so wird dieser über den Wasserzulauf 4 solange mit Wasser befüllt, bis er über einen Überlauf 14 Wasser in die Überlaufwanne 6 abgibt. Bei einem weiteren Zuströmen von Wasser in den Wassertank 2 steigt der Wasserstand in der Überlaufwanne 6, bis der Schwimmer 7 den mechanischen Schalter 8 betätigt und dadurch den Stromfluss zum Ventil 3 unterbricht, woraufhin dieses sofort schließt. In gleicher Weise, jedoch unter Umgehung des Wassertanks 2, funktioniert der erfindungsgemäße Getränkeautomat 1 auch bei entnommenem Wassertank 2, da in diesem Fall der verschwenkbare Leitungsabschnitt 10 direkt unter den Wasserzulauf 4 schwenkt und dadurch Wasser direkt in die Überlaufwanne 6 geleitet wird. Ist hier der vordefinierte Wasserstand erreicht, wird auch hier durch den Schwimmer 7 der Schalter 8 betätigt und das Ventil 3 geschlossen, wodurch eine weitere Wasserzufuhr unterbrochen ist.

Der erfindungsgemäße Getränkeautomat 1, welcher beispielsweise als Kaffeevollautomat ausgebildet sein kann, bietet dabei den großen Vorteil, dass die rein mechanisch arbeitende Sicherheitseinrichtung 9 auch bei schadhafter oder fehlerhafter Software oder generell fehlerhaften anderen elektrischen Baukomponenten zuverlässig eine Wasserzufuhr abschaltet und dadurch Wasserschäden verhindert. Es handelt sich somit um ein komplett mechanisch arbeitendes System, welches unabhängig von der Software arbeitet und dadurch erhöhten Sicherheitsanforderungen gerecht wird.

### Bezugszeichenliste

- 1: Getränkeautomat
- 2: Wassertank
- 3: Ventil
- 4: Wasserzulauf
- 5: Leitungsnetz
- 6: Überlaufwanne
- 7: Schwimmer
- 8: Schalter
- 9: Sicherheitseinrichtung
- 10: schwenkbarer Leitungsabschnitt
- 11: Trichter
- 12: Nichtgebrauchsstellung
- 13: Gebrauchsstellung
- 14: Überlauf

## Patentansprüche

1. Getränkeautomat (1) mit einem Wassertank (2) und einem über ein Ventil (3) steuerbaren Wasserzulauf (4), über welchen der Wassertank (2) aus einem Leitungsnetz (5) mit Wasser befüllbar ist, wobei eine mit
dem Wassertank (2) verbundene Überlaufwanne (6) vorgesehen ist, in welcher ein Schwimmer (7) angeordnet ist, der bei einem vordefiniertem Wasserstand in der Überlaufwanne (6) einen mechanischen Schalter (8) betätigt und das Ventil (3) schließt, wobei eine Sicherheitseinrichtung (9) vorgesehen ist, die derart ausgebildet ist, dass sie bei entnommenem Wassertank (2) die Überlaufwanne (6) fluidisch mit dem Wasserzulauf (4) verbindet, **dadurch gekennzeichnet, dass** die Sicherheitseinrichtung (9) einen federbeaufschlagten, schwenkbaren Leitungsabschnitt (10) aufweist, der bei entnommenem Wassertank (2) federbedingt unter den Wasserzulauf (4) schwenkt, oder
die Sicherheitseinrichtung (9) den Wasserzulauf (4) umfasst, der federbeaufschlagt verschwenkbar ist.

2. Getränkeautomat nach Anspruch 1, **dadurch gekennzeichnet, dass** der Leitungsabschnitt (10) an seinem dem Wasserzulauf (4) zugewandten Ende einen Trichter (11) aufweist.

3. Getränkeautomat nach Anspruch 1 oder 2, **dadurch gekennzeichnet, dass** der Leitungsabschnitt (10) bei eingesetztem Wassertank (2) entgegen der Federkraft in eine Nichtgebrauchsstellung (12) verschwenkt ist.

4. Getränkeautomat nach Anspruch 1, **dadurch gekennzeichnet, dass** der Wasserzulauf (4) bei eingesetztem Wassertank (2) kommunizierend mit diesem verbunden ist und bei entnommenem Wassertank (2) federbedingt über die Überlaufwanne (6) verschwenkt ist.

5. Getränkeautomat nach einem der vorhergehenden Ansprüche, **dadurch gekennzeichnet, dass** das Ventil (3) als elektrisch betätigbares Ventil ausgebildet ist, welches in stromlosem Zustand geschlossen ist.

6. Getränkeautomat nach Anspruch 5, **dadurch gekennzeichnet, dass** der mechanische Schalter (8) in einer durch den Schwimmer (7) aktivierten Stellung das Ventil (3) stromlos schaltet und dadurch schließt.

## Claims

1. Drinks machine (1) having a water tank (2) and a water inlet (4) that can be controlled via a valve (3) and via which the water tank (2) can be filled with water from a line network (5), wherein an overflow tray (6) is provided that is connected to the water tank (2) and in which a float (7) is arranged which actuates a mechanical switch (8) at a predefined water level in the overflow tray (6) and closes the valve (3), wherein a safety device (9) is provided which is designed such that, when the water tank (2) is removed, it fluidically connects the overflow tray (6) to the water inlet (4), **characterised in that** the safety device (9) has a spring-loaded, pivotable line section (10) which when the water tank (2) is removed pivots under spring control to below the water inlet (4), or
the safety device (9) comprises the water inlet (4), which is spring-loaded and pivotable.

2. Drinks machine according to claim 1, **characterised in that** the line section (10) has a funnel (11) at its end facing the water inlet (4).

3. Drinks machine according to claim 1 or 2, **characterised in that** when the water tank (2) is inserted the line section (10) is pivoted against the spring force into a non-use position (12).

4. Drinks machine according to claim 1, **characterised in that** when the water tank (2) is inserted the water inlet (4) is communicatively connected to said water tank (2) and when the water tank (2) is removed it is pivoted under spring control to above the overflow tray (6).

5. Drinks machine according to one of the preceding claims, **characterised in that** the valve (3) is designed as an electrically operable valve which is closed in the de-energised state.

6. Drinks machine according to claim 5, **characterised in that** the mechanical switch (8) de-energises the valve (3) in a position activated by the float (7) and thereby closes it.

## Revendications

1. Distributeur de boissons (1) comprenant un réservoir d'eau (2) et une arrivée d'eau (4) commandable par l'intermédiaire d'une vanne (3), par l'intermédiaire de laquelle arrivée d'eau le réservoir d'eau (2) peut être rempli avec de l'eau à partir d'un réseau de conduites (5), un bac de trop-plein (6) relié au réservoir d'eau (2) étant ménagé, dans lequel est disposé un flotteur (7) qui, lors d'un niveau d'eau prédéfini dans le bac de trop-plein (6), actionne un commutateur mécanique (8) et ferme la vanne (3), un dispositif de sécurité (9) étant ménagé, lequel est réalisé de manière à ce que, lorsque le réservoir d'eau (2) est retiré, il raccorde le bac de trop-plein (6) de manière fluidique à l'arrivée d'eau (4), **caractérisé en ce que**
le dispositif de sécurité (9) présente une section de conduite (10) pivotante, contrainte par ressort, laquelle, lorsque le réservoir d'eau (2) est retiré, pivote en raison du ressort en dessous de l'arrivée d'eau (4), ou
**en ce que** le dispositif de sécurité (9) comprend l'arrivée d'eau (4) qui est pivotante en étant contrainte par ressort.

2. Distributeur de boissons selon la revendication 1, **caractérisé en ce que** la section de conduite (10) présente un entonnoir (11) sur son extrémité tournée vers l'arrivée d'eau (4).

3. Distributeur de boissons selon la revendication 1 ou 2, **caractérisé en ce que** la section de conduite (10), lorsque le réservoir d'eau (2) est inséré, pivote dans une position de non-utilisation (12) en sens contraire de la force de ressort.

4. Distributeur de boissons selon la revendication 1, **caractérisé en ce que** l'arrivée d'eau (4), lorsque le réservoir d'eau (2) est inséré, est reliée à celui-ci en communiquant et, lorsque le réservoir d'eau (2) est retiré, pivote au-dessus du bac de trop-plein (6) en raison du ressort.

5. Distributeur de boissons selon l'une quelconque des revendications précédentes, **caractérisé en ce que** la vanne (3) est réalisée comme vanne actionnable électriquement, laquelle est fermée à l'état sans courant.

6. Distributeur de boissons selon la revendication 5, **caractérisé en ce que** le commutateur mécanique (8), dans une position activée par le flotteur (7), commute la vanne (3) sans courant et la ferme ainsi.
